# EUROPEAN PATENT APPLICATION

(11) **EP 3 175 718 A1**
(43) Date of publication of application: **07.06.2017**
(21) Application number: 15827274.0
(22) Date of filing: 31.07.2015
(51) Int. Cl.: A23L 33/10

(54) **INSTANT FOOD WITH COMPREHENSIVE NUTRITION**

(30) Priority: 01.08.2014 CN 201410375963
(71) Applicant: Yang, Bin, Shenzhen, Guangdong 518000 (CN)
(72) Inventor: Yang, Bin, Shenzhen, Guangdong 518000 (CN)
(74) Representative: Awapatent AB
(86) International application number: PCT/CN2015/085772
(87) International publication number: WO 2016/015679

(57) **Abstract**

A comprehensively nutritious instant food includes the following raw ingredients: rice powder 39.593849% to 44.930798%, soybean meal 29.695386% to 33.698099%, protein 8.908616% to 10.109430%, edible fiber 4.949231% to 5.616350%, carotene 0.000099% to 0.000112%, calcium 0.197969% to 0.224654%, iron 0.000356% to 0.000404%, zinc 0.000297% to 0.000337%, copper 0.000040% to 0.000045%, sodium 0.395938% to 0.449308%, potassium 0.395938% to 0.449308%, manganese 0.000040% to 0.000045%, selenium 0.000014% to 0.000016%, iodine 0.000030% to 0.000034%, phosphorus 0.013858% to 0.015726%, magnesium 0.007919% to 0.008986%, fluorine 0.000554% to 0.000629%, vitamin B1 0.000297% to 0.000337%, vitamin B2 0.000040% to 0.000045%, vitamin B6 0.000040% to 0.000045%, vitamin B12 0.000001% to 0.000001%, vitamin B3 0.000396% to 0.000449%, vitamin D 0.000013% to 0.000015%, vitamin K 0.000016% to 0.000018%, vitamin H 0.000059% to 0.000067%, vitamin B 0.000079% to 0.000090%, vitamin E 0.000178% to 0.000202%, vitamin C 0.001188% to 0.001348%, vitamin A 0.000020% to 0.000022%, edible fat 0 to 10.523458%, and refined sugar 0-5.939077%.

## Description

### TECHNICAL FIELD

The present invention relates generally to foodstuffs, and more particularly to a scientifically formulated foodstuff with comprehensive nutrition and convenience for consumption.

### BACKGROUND OF THE INVENTION

People view food as a primary need. People cannot live without food, in order to meet the needs of mankind, people grow, culture and process a lot of food for people to choose from. Scientific development has greatly enriched human's diet; however, because human do not consume correct and healthy diet and conduct reasonable amount of exercise, human's health is threatened. According to an incomplete statistics, the overweight population in developed society has a nearly 8% annual growth rate, while the overweight population in some developing countries has an annual growth rate of 11%. Excessive obesity has caused a series of "modern diseases," such as hypertension, cardiovascular and cerebrovascular diseases, diabetes and malignancies. In some poor areas and countries, food and nutrition are insufficient, the average life expectancy is low, and infant mortality is much higher than in developed countries.

There are many reasons causing the increase in obesity population or low average life expectancy, but the direct reason is that people do not get a scientifically formulated health food with comprehensive nutrition. Therefore, the industry needs to address the above-mentioned issues as soon as possible.

### SUMMARY OF THE INVENTION

In order to solve the above-mentioned technical problems, the present invention provides a scientifically formulated food with comprehensive nutrition and convenience for consumption, to meet the dietary needs of the human population.

The present invention provides a comprehensively nutritious instant food prepared by the following raw ingredients with the weight percentage contents: rice powder 39.593849% to 44.930798%, soybean meal 29.695386% to 33.698099%, protein 8.908616% to 10.109430%, edible fiber 4.949231% to 5.616350%, carotene 0.000099% to 0.000112%, calcium 0.197969 % to 0.224654%, iron 0.000356% to 0.000404%, zinc 0.000297% to 0.000337%, copper 0.000040% to 0.000045%, sodium 0.395938% to 0.449308%, potassium 0.395938% to 0.449308%, manganese 0.000040% to 0.000045%, selenium 0.000014% to 0.000016% , iodine 0.000030% to 0.000034% , phosphorus 0.013858% to 0.015726%, magnesium 0.007919% to 0.008986%, fluorine 0.000554% to 0.000629%, vitamin B1 0.000297% to 0.000337%, vitamin B2 0.000040% to 0.000045%, vitamin B6 0.000040% to 0.000045%, vitamin B12 0.000001% to 0.000001%, vitamin B3 0.000396% to 0.000449%, vitamin D 0.000013% to 0.000015%, vitamin K 0.000016% to 0.000018%, vitamin H 0.000059% to 0.000067%, vitamin B 0.000079% to 0.000090%, vitamin E 0.000178% to 0.000202%, vitamin C 0.001188% to 0.001348%, vitamin A 0.000020% to 0.000022%, edible fat 0 to 10.523458%, and refined sugar 0 to 5.939077%.

The food of the present invention is convenient to consume and can be taken directly after being reconstituted with warm water. The present invention not only saves time for office workers, but also provides convenience to those who do not have time to prepare food. The present invention is suitable for different gender and different age groups. Designed according to nutritional science research and comparison of long-term consumption for the past 10 years, the food of the present invention contains a variety of elements essential for human growth, especially rare elements and related vitamins that human cannot easily obtain from common foods. Long-term consumption of the food allows more than 83% of the consumers to maintain their weights within a healthy range, and 78% of the consumers maintain their three indicators for blood pressure, blood lipids and blood sugar within the medical standards. The low-sugar type of the present invention provides the necessary nutrition for diabetic patients, and the low-calorie type of the present invention ensures nutrient supply for weight loss of obese people. Because the rice powder in the present invention is rich in rice oil, the present invention can also invigorate the spleen and stomach.

### DETAILED DESCRIPTION OF PREFERRED EMBODIMENTS

The present invention provides a comprehensively nutritious instant food prepared by the following raw ingredients with weight percentage contents: rice powder 39.593849% to 44.930798%, soybean meal 29.695386% to 33.698099%, protein 8.908616% to 10.109430%, edible fiber 4.949231% to 5.616350%, carotene 0.000099% to 0.000112%, calcium 0.197969% to 0.224654%, iron 0.000356% to 0.000404%, zinc 0.000297% to 0.000337%, copper 0.000040% to 0.000045%, sodium 0.395938% to 0.449308%, potassium 0.395938% to 0.449308%, manganese 0.000040% to 0.000045%, selenium 0.000014% to 0.000016%, iodine 0.000030% to 0.000034%, phosphorus 0.013858% to 0.015726%, magnesium 0.007919% to 0.008986%, fluorine 0.000554% to 0.000629%, vitamin B1 0.000297% to 0.000337%, vitamin B2 0.000040% to 0.000045%, vitamin B6 0.000040% to 0.000045%, vitamin B12 0.000001% to 0.000001%, vitamin B3 0.000396% to 0.000449%, vitamin D 0.000013% to 0.000015%, vitamin K 0.000016% to 0.000018%, vitamin H 0.000059% to 0.000067%, vitamin B 0.000079% to 0.000090%, vitamin E 0.000178% to 0.000202%, vitamin C 0.001188% to 0.001348%, vitamin A 0.000020% to 0.000022%, edible fat 0 to 10.523458%, and refined sugar 0 to 5.939077%.

The components of the present invention are common ingredients in daily life and are sold in stores or pharmacies. Among them, edible fat can be rich in monounsaturated fatty acids.

The invention will now be described in further detail with reference to specific embodiments. According to the formula of the present invention, the following nutrient-rich convenience foods are prepared at different weight percentages.

### Example 1- General Type

Rice powder 39.593849%, soybean meal 29.695386%, protein 8.908616%, edible fiber 4.949231%, carotene 0.000099%, calcium 0.197969%, iron 0.000356%, zinc 0.000297%, copper 0.000040%, sodium 0.395938%, potassium 0.395938%, manganese 0.000040%, selenium 0.000014%, iodine 0.000030%, phosphorus 0.013858%, magnesium 0.007919%, fluorine 0.000554%, vitamin B1 0.000297%, vitamin B2 0.000040%, vitamin B6 0.000040%, vitamin B12 0.000001%, vitamin B3 0.000396%, vitamin D 0.000013%, vitamin K 0.000016%, vitamin H 0.00059%, vitamin B 0.000079%, vitamin E 0.000178%, vitamin C 0.001188%, vitamin A 0.000020%, edible fat 9.898462%, and refined sugar 5.939077%.

The general type of food of the present invention is suitable for middle-aged and young people, whose weights are not heavy and blood pressure, blood fat and blood sugar indicators are not high. In addition to saving cooking time for office workers and providing convenience for those who do not have time to prepare food, long-term consumption of the food and implementation of normal diet and healthy lifestyle substantially allow the consumers to maintain their weights within a healthy weight range and their blood pressure, blood lipids and blood sugar indicators within medical standards.

### Example 2- Low Sugar Type

Rice powder 42.093834%, soybean meal 31.570375%, protein 9.471113%, edible fiber 5.261729%, carotene 0.000105%, calcium 0.210469%, iron 0.000379%, zinc 0.000316%, copper 0.000042%, sodium 0.420938%, potassium 0.420938%, manganese 0.000042%, selenium 0.000015%, iodine 0.000032%, phosphorus 0.014733%, magnesium 0.008419%, fluorine 0.000589%, vitamin B1 0.000316%, vitamin B2 0.000042%, vitamin B6 0.000042%, vitamin B12 0.000001%, vitamin B3 0.000421%, vitamin D 0.000014%, vitamin K 0.000017%, vitamin H 0.000063%, vitamin B 0.000079%, vitamin E 0.000189%, vitamin C 0.001263%, vitamin A 0.000021%, and edible fat 10.523458%.

The low-sugar type of the present invention is suitable for consumption by middle-aged and elderly with moderate to heavy body weights or high blood sugar or by those suffering from diabetes. In addition to convenience for consumption, long-term consumption and implementation of normal diet and healthy lifestyle substantially allow the consumers to control their weights within the healthy weight range and maintain their blood pressure, blood lipids and blood sugar indicators within medical standards.

### Example 3- Low Calorie Type

Rice powder 44.930798%, soybean meal 33.698099%, protein 10.109430%, edible fiber 5.616350%, carotene 0.000112%, calcium 0.224654%, iron 0.000404%, zinc 0.000337%, copper 0.000045%, sodium 0.449308%, potassium 0.449308%, manganese 0.000045%, selenium 0.000016%, iodine 0.000034%, phosphorus 0.015726%, magnesium 0.008986%, fluorine 0.000629%, vitamin B1 0.000337%, vitamin B2 0.000045%, vitamin B6 0.000045%, vitamin B12 0.000001%, vitamin B3 0.000449%, vitamin D 0.000015%, vitamin K 0.000018%, vitamin H 0.000067%, vitamin B 0.000090%, vitamin E 0.000202%, vitamin C 0.001348%, vitamin A 0.000022%, and refined sugar 4.493080%.

The low calorie type of the present invention is suitable for obese people with heavy body weight and high in blood pressure, blood fat and blood sugar. In addition to convenience for consumption, long-term consumption and implementation of normal diet and healthy lifestyle substantially allow the consumers not only to control weight gain or to reduce weight, but to lower their blood pressure, blood lipids and blood sugar levels.

According to the above formula, preparation method of the comprehensively nutritious instant food of the present invention may be carried out by the following steps:
Step 1: Firstly, rice powder and water are mixed in a ratio of 1 : 5, cooked for 5 minutes, meshed with 400 mesh sieve, dried, and refined into powder for use;
Step 2: Soybeans are peeled and mixed with water at a ratio of 1: 5, boiled for 9 minutes, then passed through a 400-mesh sieve, dried and refined into soybean powder for use;
Step 3: Finally, all of the raw ingredients are weighed according to the selected proportions, uniformly mixed and packaged.

The present invention is inherited from the family, passed down several generations, and is perfected after continuous research and clinical trials. Especially in the past 6 years, hundreds of consumers of different age groups were followed up for several times. The test results are as follows:

210 food consumers were divided into three groups A1, A2 and A3 according to their ages, and were asked to consume the general type, the low sugar type, and the low calorie type for 8 consecutive months (300-600 grams per day, divided into breakfast and dinner). Above 83% of the food consumers maintained weights within a healthy range (BMI = kg / m²; BMI between 18 and 25 is considered normal body weight; BMI more than 25 is considered overweight; BMI greater than 30 is considered obese); more than 78% of the food consumers have blood pressure, blood lipids and blood sugar indicators remained within medical standards (see the table below). For those who have heavier body weights or higher blood pressure, blood lipids and blood sugar, their conditions had greatly improved after consumption of the food for an extended amount of time.

| Sample | Age | A1 | A2 | A3 |
|---|---|---|---|---|
| | | 35-45 | 45-60 | 61-70 |
| | Number of Consumers | 85 | 65 | 60 |
| Within healthy weight range | | 89% | 83% | 85% |
| three indicators for blood pressure, blood lipids and blood sugar remain within medical standards | | 92% | 78% | 84% |

While the embodiments described above are primarily intended to illustrate the inventive concept of the invention, it should be noted that those skilled in the art will recognize that modifications and improvements may be made without departing from the spirit of the invention, are within the scope of the invention.

## Claims

1. A comprehensively nutritious instant food, comprising a plurality of raw ingredients, weight percentages of the raw ingredients being:
39.593849% to 44.930798% of rice powder, 29.695386% to 33.698099% of soybean meal, 8.908616% to 10.109430% of protein, 4.949231% to 5.616350% of edible fiber, 0.000099% to 0.000112% of carotene, 0.197969% to 0.224654% of calcium, 0.000356% to 0.000404% of iron, 0.000297% to 0.000337% of zinc, 0.000040% to 0.000045% of copper, 0.395938% to 0.449308% of sodium, 0.395938% to 0.449308% of potassium, 0.000040% to 0.000045% of manganese, 0.000014% to 0.000016% of selenium, 0.000030% to 0.000034% of iodine, 0.013858% to 0.015726% of phosphorus, 0.007919% to 0.008986% of magnesium, 0.000554% to 0.000629% of fluorine, 0.000297% to 0.000337% of vitamin B1, 0.000040% to 0.000045% of vitamin B2, 0.000040% to 0.000045% of vitamin B6, 0.000001% to 0.000001% of vitamin B12, 0.000396% to 0.000449% of vitamin B3, 0.000013% to 0.000015% of vitamin D, 0.000016% to 0.000018% of vitamin K, 0.000059% to 0.000067% of vitamin H, 0.000079% to 0.000090% of vitamin B, 0.000178% to 0.000202% of vitamin E, 0.001188% to 0.001348% of vitamin C, 0.000020% to 0.000022% of vitamin A, 0 to 10.523458% of edible fat, and 0 to 5.939077% of refined sugar.

2. The comprehensively nutritious instant food according to claim 1, wherein the weight percentages of the raw ingredients are:
39.593849% of rice powder, 29.695386% of soybean meal, 8.908616% of protein, 4.949231% of edible fiber, 0.000099% of carotene, 0.197969% of calcium, 0.000356% of iron, 0.000297% of zinc, 0.000040% of copper, 0.395938% of sodium, 0.395938% of potassium, 0.000040% of manganese, 0.000014% of selenium, 0.000030% of iodine, 0.013858% of phosphorus, 0.007919% of magnesium, 0.000554% of fluorine, 0.000297% of vitamin B1, 0.000040% of vitamin B2, 0.000040% of vitamin B6, 0.000001% of vitamin B12, 0.000396% of vitamin B3, 0.000013% of vitamin D, 0.000016% of vitamin K, 0.000059% of vitamin H, 0.000079% of vitamin B, 0.000178% of vitamin E, 0.001188% of vitamin C, 0.000020% of vitamin A, 9.898462% of edible fat, and 5.939077% of refined sugar.

3. The comprehensively nutritious instant food according to claim 1, wherein the weight percentages of the raw ingredients are:
42.093834% of rice powder, 31.570375% of soybean meal, 9.471113% of protein, 5.261729% of edible fiber, 0.000105% of carotene, 0.210469% of calcium, 0.000379% of iron, 0.000316% of zinc, 0.000042% of copper, 0.420938% of sodium, 0.420938% of potassium, 0.000042% of manganese, 0.000015% of selenium, 0.000032% of iodine, 0.014733% of phosphorus, 0.008419% of magnesium, 0.000589% of fluorine, 0.000316% of vitamin B1, 0.000042% of vitamin B2, 0.000042% of vitamin B6, 0.000001% of vitamin B12, 0.000421% of vitamin B3, 0.000014% of vitamin D, 0.000017% of vitamin K, 0.000063% of vitamin H, 0.000079% of vitamin B, 0.000189% of vitamin E, 0.001263% of vitamin C, 0.000021% of vitamin A, and 10.523458% of edible fat.

4. The comprehensively nutritious instant food according to claim 1, wherein the weight percentages of the raw ingredients are:
44.930798% of rice powder, 33.698099% of soybean meal, 10.109430% of protein, 5.616350% of edible fiber, 0.000112% of carotene, 0.224654% of calcium, 0.000404% of iron, 0.000337% of zinc, 0.000045% of copper, 0.449308% of sodium, 0.449308% of potassium, 0.000045% of manganese, 0.000016% of selenium, 0.000034% of iodine, 0.015726% of phosphorus, 0.008986% of magnesium, 0.000629% of fluorine, 0.000337% of vitamin B1, 0.000045% of vitamin B2, 0.000045% of vitamin B6, 0.000001% of vitamin B12, 0.000449% of vitamin B3, 0.000015% of vitamin D, 0.000018% of vitamin K, 0.000067% of vitamin H, 0.000090% of vitamin B, 0.000202% of vitamin E, 0.001348% of vitamin C, 0.000022% of vitamin A, and 4.493080% of refined sugar.
